# EUROPEAN PATENT APPLICATION

(11) **EP 1 500 380 A2**
(43) Date of publication of application: **26.01.2005**
(21) Application number: 04425318.5
(22) Date of filing: 05.05.2004
(51) Int. Cl.: A61C 13/00, A61C 8/00

(54) **Method for the manufacture of dental prosthesis frameworks of the type screwed to a plurality of implants**

(30) Priority: 25.07.2003 IT TO20030575
(71) Applicant: ACOM S.r.l., 10083 Favria (Torino) (IT)
(72) Inventor: Rostagno, Luigi, 10080 Rivara Canavese (Torino) (IT); Marta, Sandro, 10091 Alpignano (Torino) (IT); Nicli, Giuseppe, 10088 Volpiano (Torino) (IT)
(74) Representative: Fioravanti, Corrado

(57) **Abstract**

Into the mandibular or maxillary bone of a patient a plurality of osteo-integrated implants (10) are inserted. Each implant (10) has a bearing surface (12) for a mating surface (13) of a framework (F), and a threaded hole (15) perpendicular to the bearing surface (12) and capable of receiving a screw (14) for connecting the framework to the implant (10). To each implant is coupled a gauge (20) with a stem (21) screwed into the threaded hole (15) of the implant and a spherical head (22) protruding visibly beyond the edge of the patient's gum. Images of the oral cavity are obtained from different viewpoints, and from those images data regarding the position of the centres (Z) of the spherical heads and data regarding the orientation of the stems (21) are obtained. These data indicate the positions and orientations of the bearing surfaces (12) of the implants (10) and are used to control the operation of a numerically controlled milling machine for machining a framework (F) having bearing surfaces (13) mating with the bearing surfaces (12) of the implants installed in the oral cavity of the patient.

## Description

The present invention refers to a method for the manufacture of dental prosthesis frameworks of the type fixed to a plurality of osteo-integrated implants in the mandibular or maxillary bone.

Dental prosthesis systems are known comprising a metallic framework of arcuate shape which has on one side the prosthetic occlusal component and on the other side is screwed to a plurality of osteo-integrated implants fixed along the mandibular or maxillary bone.

The implants are generally metallic elements having at one end an externally threaded tang which is screwed into a hole made surgically in the bone. The opposite end (or head) of the implant protrudes from the bony surface and has an internally threaded central hole for receiving a threaded fixing member (customarily a gold-plated titanium screw) which engages in a hole in the prosthetic framework to connect it in a stable manner to the implants. The interface surfaces of the implants and of the frameworks constitute bearing surfaces which must mate and which are held one against the other by the effect of the tightening of the aforesaid screws. In some cases, the surface against which the framework bears is formed by an annular cylinder (termed *abutment cylinder*) which is arranged on the end of the implant so as to be interposed between that and the framework for the purpose of distributing the tensions.

The frameworks of the type to which the present invention relates are produced by milling in a single block of a biocompatible metallic material such as titanium, using numerically controlled milling machines which also machine the bearing surfaces intended to interface with the implants.

It is of fundamental importance, for correct functioning of the prosthesis, for its service life and the health of the patient, that the interface surfaces are coupled accurately (according to a so-called "passive" fit) without the screws, once they are tightened, transmitting appreciable stresses to the maxillary or mandibular bone. A problem which is encountered in prostheses with titanium frameworks is in fact linked to the considerable intrinsic rigidity of the one-piece frameworks. The tightening of the screws, in the presence of any possible "*misfit*", that is to say, a lack of accuracy in the coupling between the interface surfaces, induces in the framework a residual tension, the vertical and/or horizontal components of which exert various kinds of stress on the peri-implantar bone which have extremely damaging effects on the prosthesis and on the patient. The tensions in fact tend to cause breaking-up of the bone in the area surrounding the implant, particularly the loss of the osteo-integration around the external thread of the tang of the implants. The tensions often cause the internal screw and/or the internal thread of the implant engaged by the screw to give way. If there is then a lack of a stable fixing point for the framework, the considerable forces which are generated during mastication are discharged in an anomalous manner onto the implants, subjecting these latter to abnormal and continuous stresses which reduce the useful life of the prosthesis and compromise the health of the patient. The lost of an implant sometimes makes it impossible to reinsert a new implant at the same point, because of the loss of bone.

It has been noted that a *misfit* of a few tenths of a millimetre is sufficient to cause any one of the drawbacks mentioned above. Cited in this connection are the articles *"Prosthesis misfit and marginal bone loss in edentulous implant patients*", published in The International Journal of Oral & Maxillofacial Implants, Volume 11, Number 5, 1996; *"Measurements of bone and frame-work deformations induced by misfit of implant superstructures"* published in Clinical Oral Implant Research, 1998 pp. 272-280.

The method more often used recently for industrial production of frameworks for titanium prostheses screwed onto implants, and which has made it possible to obtain better results compared with the conventional techniques of lost wax casting, provides for the use of a CAD-CAM apparatus which is controlled on the basis of information regarding the position, shape and orientation of the bearing surfaces of the implants. These data are currently achieved, firstly, by taking an impression of the position of the implants inserted in the mouth of the patient. From that impression, a plaster model is made which reproduces the geometry of the implants; on that model there is modelled in wax, and then in resin, a copy of the final metallic framework. A digitalised scan (of the laser type or by means of a contact sensor) is then carried out on the copy of the framework in resin. The information obtained with the scanner is then inserted in a file with which is controlled the operation of a numerically controlled milling machine which, starting from a single block of titanium, produces the final framework. This machining does not provide for the direct coupling of the framework onto the implants, but requires the interposition of intermediate pillars, with an increase in the degree of inaccuracy.

When obtaining the titanium framework from the resin or plaster model, each of the steps inevitably introduces a measuring error which leads to the conclusion that such a method is not capable of guaranteeing a satisfactory fit, as discussed in the article: *"In Vivo Measurements of Precision of Fit Involving Implant-Supported Prostheses in the Edentulous Jaw*" published in The International Journal of Oral & Maxillofacial Implants, Volume 11, Number 2, 1996, pp. 151-158. In particular, the major loss of precision takes place in the phase of transferring the information regarding position, shape and orientation of the bearing surfaces of the implants, because of the method of taking manually the position of the implants in the maxillary or mandibular arch carried out with casting of the impression in plaster and/or resin.

In the article "*Photogrammetry* - *An alternative to Conventional Impressions in Implant Dentistry? A Clinical Pilot Study"* published in The International Journal of Prosthodontics, Vol. 12, Number 4, 1999, pp 363-368, the conventional impression technique is criticised, and the use of a 3D photogrammetric technique is proposed for measuring the position of the implants in the oral cavity in order to transfer the data regarding position and orientation of the heads of the implants (in particular of their coupling surfaces) with greater precision to a numerically controlled milling machine. That experimental research did not, however, results in any clinical application which might have modified the technique of impression in the mouth.

A general object of the present invention is to propose a method for producing a framework of the type prepared by milling by a numerically controlled machine from a single block of metallic material producing, on the framework, surfaces capable of mating with absolute precision with all the corresponding bearing surfaces of the implants fixed in the oral cavity of a patient.

A particular object of the invention is to improve the acquisition of the data regarding the position and orientation of the bearing surfaces of the implants and the subsequent transmission of the data to the numerically controlled milling apparatus.

These and other objects and advantages, which will become clearer hereinafter, are achieved according to the invention by a method as defined in the appended claims.

A description will now be given of a preferred but nonlimiting embodiment of the method according to the invention, with reference to the appended drawings, in which:
Figure 1 is a diagrammatic perspective representation of the oral cavity of a person in whose mandibular bone implants have been installed for the fixing of a dental prosthesis framework;
Figure 2 is a partial diagrammatic view in vertical section and on an enlarged scale of an implant and a portion of the framework facing the implant in a misfit state;
Figure 3 is a partial view similar to Figure 2 of an implant and a frame fixed one to the other by a central screw in a correctly fitted state;
Figures 4 and 5 are partial diagrammatic views in vertical section of two variants of gauges coupled to implants in order to take photogrammetric measurements of the positions *in vivo* of the various implants on which the titanium framework will bear; and
Figure 6 is a partial diagrammatic view in vertical section of a further preferred embodiment of the gauges.

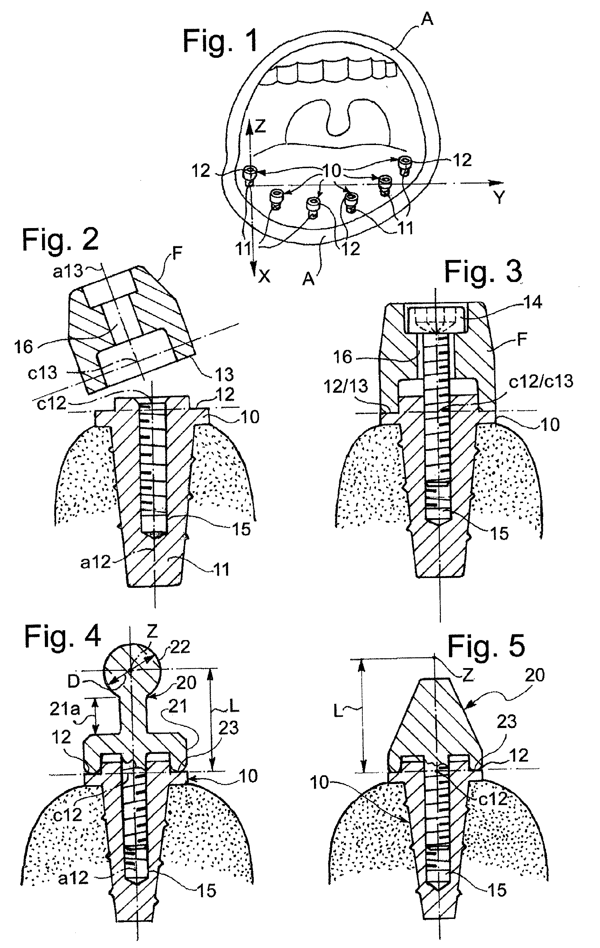

Referring initially to Figure 1, a plurality of implants indicated diagrammatically by 10 (six in number in this example) are implanted in the mandibular bone A of a patient in positions that are as far as possible equidistant in order to constitute as many anchorage points of a one-piece titanium framework of the type mentioned in the introductory part of the description. In the example illustrated and described hereinafter, six implants are provided in the mandibular bone, but it is intended that the method of the invention is also equally valid for application to the maxillary bone and with a number of implants other than six.

The techniques with which the implants are inserted into the bone, and the structural characteristics of the implants themselves (which may be of any known type, for example Brånemark osteo-integrated implants produced by Nobelpharma AB), are not in themselves relevant to the purposes of understanding of the invention, and will not therefore be described here in detail. It is sufficient to recall the fact that an implant has a terminal anchorage portion having an externally threaded tang 11 which is screwed into a hole (not illustrated) made surgically in the mandibular or maxillary bone. The opposite end or head end has a bearing surface 12 intended to act as an abutment surface for a mating surface 13 present on the framework F (Figures 2 and 3); this surface of the framework is that which the present invention intends to machine accurately in order that it engages "passively" with the bearing surface 12 of the implant on tightening of a screw 14 which engages in a central vertical hole 15 formed in the head of the implant 10 and in a corresponding hole 16 of the framework.

Figure 2 shows diagrammatically a *"misfit"* state, which the invention proposes to avoid. Figure 3 on the other hand illustrates a state of "*passive fit"* between the surfaces 12 and 13 which mate with one another, so that the tightening of the screw 14 which connects the framework in a stable manner to one of the implants does not induce residual tensions as discussed in the introductory part of the description.

Specifically, it is desired that all the pairs of surfaces 12, 13 are mating surfaces. In geometric terms, for each pair of mating surfaces,
- the geometric centres C12 and C13 of the two surfaces 12 and 13 must have the same position in plan and the same level, that is to say, equal values of co-ordinates along a set of three reference axes x, y and z, and
- the surfaces 12 and 13 must have the same orientation in space, that is to *say,* the axes a12 and a13 passing through the geometric centres C12, C13 and perpendicular to the respective surfaces must have the same angle of inclination with respect to the set of three cartesian axes x, y, z.

It is therefore necessary to detect exactly the positions and orientations of the six bearing surfaces 12 of the implants, as positioned in the oral cavity (and illustrated in Figure 1).

According to the invention, with each implant 10 there is temporarily associated a respective gauge indicated as a whole by 20 (Figures 4 and 5), which is of a shape and dimensions that are predetermined and which make it possible to determine exactly the position and orientation of the bearing surfaces 12 of the implants and to acquire easily, by means of photographic or photogrammetric measurements, the data regarding position and orientation which will then be transferred to a numerically controlled milling apparatus which will provide, on the framework F, surfaces 13 mating with the bearing surfaces 12.

In the embodiment illustrated in Figure 4, each gauge comprises a substantially cylindrical base portion with a straight, externally threaded stem 21 and a spherical head portion 22. The threaded stem 21 is screwed into the central hole 15 of an implant as far as a predetermined height, which may be determined by the abutment of a transverse or horizontal shoulder 23 formed by the gauge 20 against the surface 12 of the implant.

Throughout the present description and the following claims, terms and expressions such as "vertical" or "longitudinal" and "horizontal" or "transverse" are to be understood as referring to the main axis a12 of an implant and to the installed state, approximately vertical (considering a person who is standing, with the mouth closed), in which the implants are fixed with respect to the mandibular or maxillary bone.

However the gauge is configured, in the screwed-in or abutment state, the spherical head 22 and a connecting portion 21a for connection to the stem 21 protrude beyond the edge of the gum and are therefore easily visible to anyone observing the oral cavity, while the bearing surface 12 of the implant is generally covered by the edge of the gum to anyone observing the patient frontally.

Once the gauges have been fitted on and screwed into the respective implants, it is possible to take photogrammetric images of the oral cavity with the gauges in order to obtain the data regarding position and orientation which make it possible to reconstruct a three-dimensional map of the implants, as explained more clearly hereinafter.

Since the diameter D of the spherical heads 22 is known, the images obtained make it possible to establish accurately the position (and more particularly the co-ordinates x, y, z) of the centres Z of all the spherical heads. The stems 21 of each gauge, the connecting portions 21a of which are at least partly visible in the installed state, make it possible to establish, for each implant, the direction of the "longitudinal" axis a12 which passes through the centre Z of the spherical head and through the geometric centre C12 of the bearing surface 12 of the implant. The fixed distance L between the centre Z of the spherical head and the transverse shoulder 23 bearing on the surface 12 of the implant is known. The distance L is equivalent to the distance between the centre Z of the spherical head and the geometric centre C12 of the bearing surface 12 of an implant. It is therefore possible to determine precisely the position of the geometric centre C12 of the bearing surface 12 of each implant and the orientation of that surface (this orientation is perpendicular in each implant to the longitudinal axis a12 of the respective gauge).

With regard to obtaining the images for digitally reproducing a three-dimensional map of the bearing surfaces of the implants, various photogrammetric instruments and techniques for three-dimensional measurements can be used, provided that they are capable of determining unambiguously the arrangement and orientation of the aforesaid surfaces. In this regard it is important to note that in order to determine the co-ordinates of the centre of a spherical head and the vectorial components of the longitudinal axis of the gauge, at least two images of the oral cavity from at least two different angles must be acquired. The spherical, or at least partly spherical, shape of the head 22 is advantageous, since it allows the position of its centre Z to be determined from any observation point.

A possible sequence of steps for the acquisition of the geometric data regarding the bearing surfaces of the implants is summarised hereinafter.
a) Calibration of a photographic camera is carried out. A procedure is carried out which is capable of determining the real "intrinsic" parameters of the photographic instrument, such as the dimension of the pixels, the width/height ratio, the position of the centre of the image, and the radial distortion coefficient.
b) Various images of the gauges mounted on the implants are acquired, so as to represent viewpoints that are as different as possible from one another, where each gauge is represented in at least two images.
c) On each image the important points or geometric characteristics are identified (for example the positions of the spherical heads and of the stems visible on each image are identified) and the correspondences between the various characteristics.
d) The positions of the viewpoints of the images are reconstructed. The points or characteristics identified in step c) are correlated with the intrinsic parameters of the photographic camera (step a), and the three-dimensional viewpoint of each image, or the position of the photographic camera for each take with respect to a single system of reference (x, y, z) is determined.
e) The three-dimensional positions of the gauges are reconstructed. Since the positions of the viewpoints for each image and the optical parameters of the images themselves are known, the three-dimensional positions of the notable points, for example of the spherical heads and the stems of the gauges, are determined.
f) The positions of the geometric centres of the bearing surfaces of the implants and their orientation are reconstructed by means of the known geometric relationships between the characteristic points of the gauges (for example, distance between centre of spherical head and abutment shoulder).
g) The position and orientation data obtained in step f) are inserted into a software file which is used by a CAD-CAM program which is employed to control the operation of a numerically controlled milling machine which, starting from a single block of titanium, obtains the final framework with bearing surfaces mating with the bearing surfaces of the implants installed in the oral cavity of the patient.

It is to be understood that the invention is not limited to the embodiment described and illustrated here, which is to be regarded as an example of the method for the construction of a framework for dental prostheses. The invention is capable of modifications relating to shape and arrangement of parts, constructional details and function. Persons skilled in the art will recognise that the position and orientation of the bearing surface of an implant may be determined by using gauges of a shape different from those illustrated by way of example. For example, as illustrated in Fig. 5, gauges of conical or frustoconical shape may be used, the vertex Z of which (equivalent to the centre of the spherical head of the example illustrated in Fig. 4) and the axis of which make it possible to establish in space a point, a direction and a distance L from the bearing surface 12 of an implant.

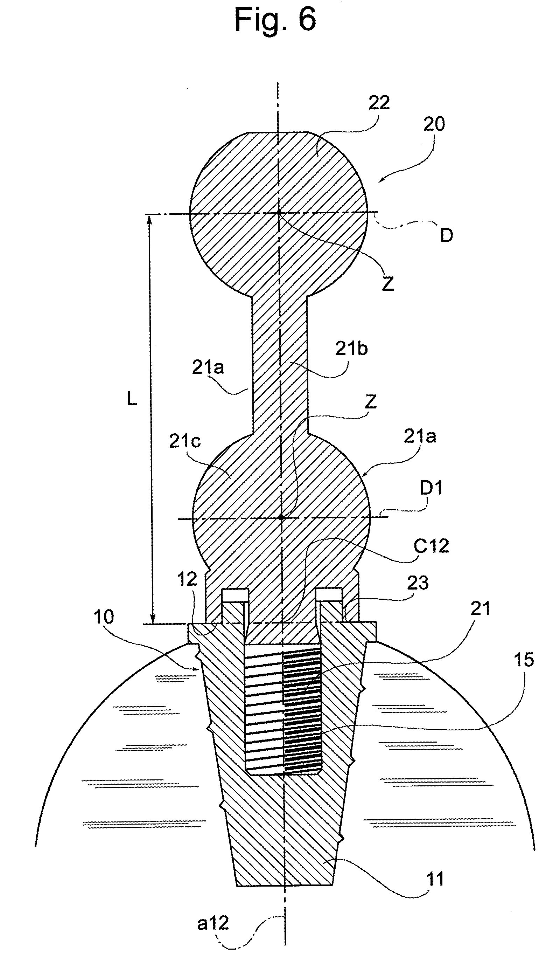

Figure 6 shows a preferred embodiment of the gauges 20, wherein parts and elements identical or similar to those described with reference to the preceding figures have been assigned the same numerical references. This variant differs from that described previously in Figure 4 in that the connecting portion 21a has a first straight portion 21b and a spherical body 21c, located in proximity to the transverse shoulder 23, and having a centre Z1 and diameter D1 suitably equal to the diameter D of the head 22. The centre Z1, which advantageously (but not necessarily) lies on the axis a12, and the centre Z make it possible to establish precisely the position of the geometric centre C12 and the orientation of the bearing surface 12.

## Claims

1. A method for the manufacture of dental prosthesis frameworks of the type fixed to a plurality of osteo-integrated implants in the mandibular or maxillary bone of a patient, comprising the steps of:
- arranging a plurality of osteo-integrated implants in the mandibular or maxillary bone of a patient, where each implant (10) has
an anchorage portion (11), externally threaded and osteo-integrated in the mandibular or maxillary bone,
a head end with a bearing surface (12) for a mating surface (13) present on a framework (F), the bearing surface (12) defining a geometric centre (C12),
a threaded hole (15) formed in the head end and orientated in a predetermined direction (a12) and substantially perpendicular with respect to said bearing surface (12), the hole (15) being intended to receive a threaded fixing member (14) for connecting the framework (F) to the implant (10),
**characterised in that** it comprises the steps of:
- providing a corresponding plurality of gauges (20), each having:
an externally threaded stem portion (21) having a thread corresponding to that of the threaded hole (15) of an implant (10),
a head portion (22) defining a point (Z) spaced by a known distance (L) from an abutment surface (23) formed by the gauge (20) and capable of abutting said bearing surface (12) of an implant (10),
a connecting portion (21a) for connection between the head portion (22) and the stem portion (21), the connecting portion (21a) defining a direction (a12) coaxial with the stem portion (21) and passing through said point (Z) of the head portion (22),
- coupling the gauges (20) to the implants (10) by screwing the stem portions (21) of the gauges into the holes (15) in the implants (10) in order to reach a predetermined insertion state in which the head portion (22) and at least a part of the connecting portion (21a) of the gauges protrude visibly beyond the edge of the patient's gum,
- obtaining by means of photogrammetric apparatus at least two images of the oral cavity from at least two different viewpoints, where the head portions and the connecting portions (21a) of each gauge (20) are visible in at least two images,
- obtaining from said images the data regarding the position of said points (Z) of the head portions (22) and the data regarding the orientation of the directions of the connecting portions (21a), said data unambiguously indicating the positions of the geometric centres (C12) and the orientations of the bearing surfaces (12) of the implants (10), and
- using the data obtained to control the operation of a numerically controlled milling machine for machining a framework (F) with bearing surfaces (13) mating with the bearing surfaces (12) of the implants (10) installed in the oral cavity of the patient.

2. A method according to claim 1, **characterised in that**
in each implant (10) said bearing surface (12) is oriented substantially transversely to the threaded hole (15),
each gauge (20) has a substantially transverse abutment surface (23) capable of abutting said bearing surface (12) of an implant (10), and **in that**
said predetermined insertion state is determined by the abutment of the transverse abutment surface (23) of the gauge against said bearing surface (12) of the implant (10).

3. A method according to claim 1, **characterised in that** said head portions (22) of the gauges (20) have an at least partially spherical shape, the centres of which shapes coincide with said points (Z).

4. A method according to claim 3, **characterised in that** said head portions (22) of the gauges (20) have the shape of spheres of predetermined diameter (D).

5. A method according to claim 1, **characterised in that** said connecting portions (21a) have at least one straight section (21b).

6. A method according to claim 1, **characterised in that** each connecting portion (21a) has an at least partially spherical body (21c) having a predetermined centre (Z1) and diameter (D1); said point (Z) and said centre (Z1) unambiguously establishing the direction (a12) coaxial with the stem portion (21), and therefore the position of the geometric centre (C12) and the orientation of the bearing surface (12) of the implants (10).

7. A method according to claim 6, **characterised in that** said centre (Z1) lies on an axis (a12) passing through the point (Z) of the head portion (22) and parallel to the axis of the stem portion (21).

8. A method according to claim 6, **characterised in that** the head portion (22) and the body (21c) are at least partially spherical in shape.

9. A method according to claim 8, **characterised in that** the head portion (22) and the body (21c) are of equal diameter (D, D1).

10. The use of gauges (20) associated with osteo-integrated implants (10) in a maxillary or mandibular bone in order to obtain, by means of photogrammetric techniques, data regarding the position and orientation of said implants in order to manufacture a dental prosthesis framework that can be accurately coupled to said implants.

11. A gauge (20) to be used in a method according to any one of the preceding claims, **characterised in that** it comprises:
- an externally threaded stem portion (21);
- a head portion (22) defining a point (Z) spaced by a predetermined distance (L) from a shoulder (23) transverse to the stem portion (21);
- a connecting portion (21a) for connection between the head portion (22) and the stem portion (21).

12. A gauge (20) according to claim 11, **characterised in that** said head portion (22) has an at least partially spherical shape, the centre of which coincides with the point (Z).

13. A gauge (20) according to claim 12, **characterised in that** said head portion (22) has the shape of a sphere of predetermined diameter (D).

14. A gauge (20) according to claim 11, **characterised in that** said connecting portion (21a) has at least one straight section (21b).

15. A gauge (20) according to claim 11, **characterised in that** said connecting portion (21a) has an at least partially spherical body (21c) having a predetermined centre (Z1) and diameter (D1).

16. A gauge (20) according to claim 15, **characterised in that** said centre (Z1) of the at least partially spherical body (21c) lies on an axis (a12) passing through the point (Z) of the head portion (22) and parallel to the axis of the stem portion (21).

17. A gauge (20) according to claim 15, **characterised in that** the head portion (22) and the body (21c) are at least partially spherical in shape.

18. A gauge (20) according to claim 17, **characterised in that** the head portion (22) and the body (21c) are of equal diameter (D, D1).
